Europäisches Patentamt

(19) European Patent Office

Office européen des brevets

(11) Publication number: **0 199 820**

**A1**

(12) # EUROPEAN PATENT APPLICATION
published in accordance with Art. 158(3) EPC

(21) Application number: 85905229.2

(22) Date of filing: 17.10.85

Data of the international application taken as a basis:

(86) International application number:
PCT/JP85/00580

(87) International publication number:
WO86/02768 (09.05.86 86/10)

(51) Int. Cl.⁴: **G 11 B 11/10**
**G 11 B 7/00, G 11 B 13/00**

(30) Priority: 22.10.84 JP 221597/84

(43) Date of publication of application:
05.11.86 Bulletin 86/45

(84) Designated Contracting States:
AT DE FR GB IT NL

(71) Applicant: SONY CORPORATION
7-35 Kitashinagawa 6-Chome Shinagawa-ku
Tokyo 141(JP)

(72) Inventor: YAMAMOTO, Masanobu Sony Corporation
7-35, Kitashinagawa 6-chome
Shinagawa-ku Tokyo 141(JP)

(74) Representative: Descourtieux, Philippe et al,
CABINET BEAU de LOMENIE 55 rue d'Amsterdam
F-75008 Paris(FR)

(54) DISC DEVICE.

(57) In the disc device, the information signals are recorded on a disc or the information signals recorded on the disc are reproduced, with the rotation of the disc controlled suitably. A clock signal which modulates the intensity of the reflected light and an information signal which turns the planes of polarization of the reflected light in two different directions and does not modulate the intensity of the reflected light are recorded on the disc. The modulation of the intensity of the reflected light is detected to reproduce the clock signal, and the reflected light having planes of polarization which face in two different directions is differentially detected. The information signal is thus reproduced without being influenced by the intensity modulation. This enables the clock signal and information signal to be reproduced separately even when they are recorded in a superposed state.

FIG. I

$\lambda/_8 \pm \Delta X$

$\lambda/_4$

2          3          2

SPECIFICATION

DISC DEVICE

Technical Field:

The present invention relates to a disc device for recording information signals in or reproducing them from a disc while disc rotation is controlled.

Background Art:

A magneto-optical disc device is a typical example of the disc device described above. Pregrooves consisting of address pits and DC grooves are preformed on the magneto-optical disc. Tracking and address readout are performed using the pregrooves. If such a magneto-optical disc is rotated at a constant angular velocity, proper recording or reproducing can be performed using these pregrooves.

Clock information, however, cannot be obtained from the pregrooves at small intervals. If the magneto-optical disc is rotated at a constant linear velocity to increase the recording information quantity, the disc device must have a linear encoder and a CPU. The CPU calculates a predetermined rotational speed from an addresses and sends a control signal to a rotation servo system.

However, if the disc device has the linear encoder and the CPU, a compact device becomes expensive.

If clock information can be obtained from the pregroove formed on the disc, disc rotation can be controlled by a simple mechanism and circuit. However, when a clock signal is recorded in pregrooves in the same manner as addressing, i.e., by forming pits, the clock and information signals are superposed. As a result, the information signals cannot be properly reproduced.

Disclosure of Invention:

A disc device according to the present invention comprises a disc recorded with a clock signal for modulating an intensity of reflected light and an information signal for turning the plane of polarization of the reflected light in a first or second direction, and an optical system for detecting the reflected light whose intensity is modulated and for differentially detecting the reflected light having the plane of polarization in the first direction and .the reflected light having the plane of polarization in the second direction, wherein rotation of the disc is controlled in response to the clock signal reproduced on the basis of the differential detection and information signal recording or reproducing according to the differential detection is performed.

In the disc device according to the present invention, the modulation of the intensity of the reflected light is detected to reproduce the clock signal, and the reflected light having planes of polarization which face in two different directions is differentially detected. This enables the clock signal and the information signal to be reproduced separately, even when they are recorded in a superposed state.

Brief Description of Drawings:

Fig. 1 is a sectional view showing pregrooves of a disc according to an embodiment of the present invention;

Fig. 2 is a graph showing the intensity of the reflected light modulated by the pregrooves in Fig. 1; and

Fig. 3 is a graph showing a differentially detected information signal.

Best Mode of Carrying Out the Invention:

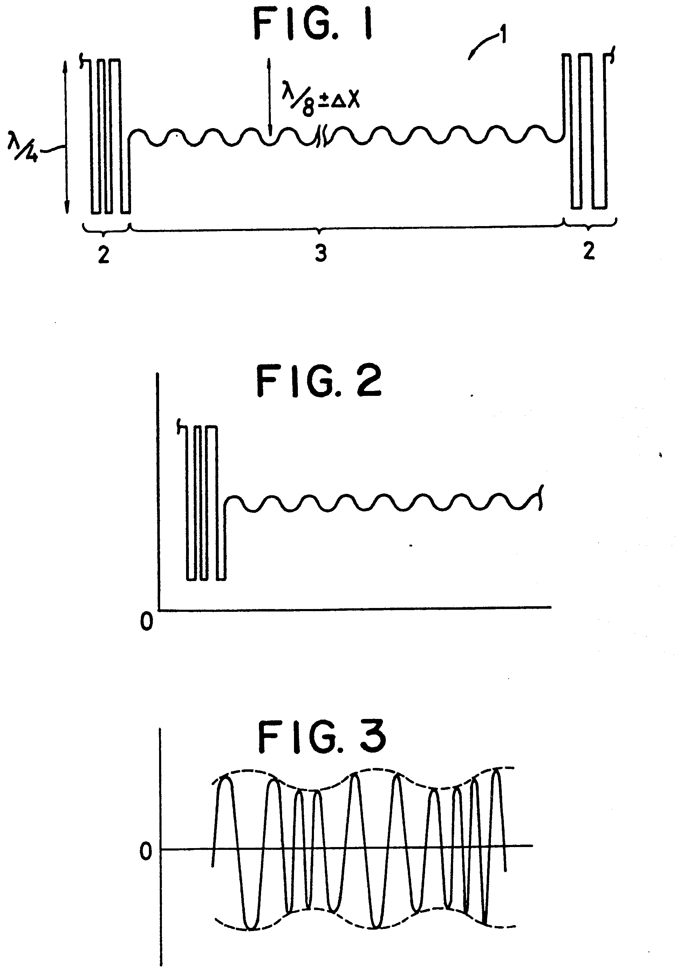

An embodiment of the present invention, applied to an magneto-optical disc device, will be described with reference to Figs. 1 to 3.

In a magneto-optical disc device, the direction of magnetization of a perpendicular magnetized film is inverted to record a signal. The signal is reproduced by detecting a component polarized by a polar Kerr effect among magneto-optical Kerr effects.

In the magneto-optical disc device of this embodiment, light reflected by the magnetized film is split into two beams by a half mirror. The two reflected beams pass through separate analysers for upward and downward magnetization respectively, and then are detected by separate photodetectors. The outputs from the photodetectors are differentially detected to reproduce the signal.

According to the differential detection method, as a common mode signal such as noise can be rejected, signal reproducing with a high C/N can be achieved. A common mode rejection ratio by the differential detection method varies according to spatial frequencies. The ratio is given by a value varying from about 20 dB in a relatively low frequency band to about 10 dB in a relatively high frequency band.

Pregrooves 1 in the magneto-optical disc in this embodiment consist of address pits 2 having a depth of $\lambda/4$ (where $\lambda$ is the wavelength of the read light) and grooves 3, as shown in Fig. 1. The grooves 3 are formed in the form of a sinusoidal wave. The sinusoidal wave has an amplitude of $2\Delta x$ sufficiently smaller than $\lambda/8$ with respect to the $\lambda/8$ depth as the center of the wave level and a frequency of about 10 kHz. The information signals are recorded in the grooves 3 at a frequency of several MHz.

The modulation of the intensity of light reflected by the magneto-optical disc becomes maximum at the $\lambda/4$ depth as in the address pit 2, and minimum at the zero depth. The modulation values of the intensity of the reflected light are extremal values on the surface of the magneto-optical disc and at the $\lambda/4$

depth.  The modulation value changes about linearly near the λ/8 depth as in the grooves 3.

For this reason, even if the sinusoidal wave such as the grooves 3 is formed on the surface of the magneto-optical disc or at the λ/4 depth, the intensity of the reflected light cannot be substantially modulated thereby.  However, if the sinusoidal wave is formed at the λ/8 depth such as the grooves 3, the intensity of the reflected light can be modulated thereby.

As a result, when the light reflected by the pregrooves 1 is measured, the intensity profile is substantially the same as the sectional shape of the pregrooves 1, as shown in Fig. 2.  In this case, if the intensity of the light reflected by the mirror surface portion of the magneto-optical disc  is compared with the intensity shown in Fig. 2, the intensity level of the surface of the address pit 2 is about 0.8 and the level of the groove 3 is about 0.55±0.05 if the level of the mirror surface portion is defined as 1.

Even if the information signals are recorded in the grooves 3, the reflectance of the magneto-optical disc does not change so that the intensity profile in Fig. 2 also does not change.  In addition, the information signals recorded in the grooves 3 have higher frequencies than those of the sinusoidal wave formed in the grooves 3.

The intensities of the individual reproduced information signals, therefore, have as DC components the modulated portions a maximum level of which corresponds to Δx.

When the information signal is reproduced by the differential detection method as described above, the DC component can be eliminated by the common mode signal rejection effect.  Therefore, the information signal can be reproduced without being influenced by the sinusoidal wave formed in the grooves 3.  In practice, however, a slight influence acts on the reproduced information signal. As shown in Fig. 3, the signal is slightly AM-modulated.

By comparing the frequency of the sinusoidal wave portion of the signal in Fig. 2 with the frequency of a reference signal, a magneto-optical disc linear velocity deviation from a predetermined velocity can be detected.

The sinusoidal wave formed in the grooves 3 serves as a clock signal. The linear velocity corresponding to the rotation of the magneto-optical disc can be controlled to be constant, and the information signals can be reproduced according to the differential detection method.

A signal for modulating the grooves 3 is preferably a sinusoidal wave having a frequency for gaining a large common mode rejection ratio. If the intensity of the reflected light is modulated with a rectangular wave, a high-frequency spectrum is formed. In such a high-frequency range, the common mode rejection ratio is decreased, as previously mentioned. As a result, the differential output is subjected to spike-like modulation.

The amplitude of the sinusoidal wave must fall within the range which does not influence reproduction of the information signal in the resultant common mode rejection ratio, and which stably reproduces the clock signal.

Alternatively, the width of the groove 3 can be changed, in place of the depth of the groove 3, in the form of a sinusoidal wave.

Industrial Applicability:

As described above, even if the clock and information signals are recorded in a superposed state in the disc device according to the present invention, these signals can be separately reproduced. The disc rotation can be controlled by a simple mechanism and circuit by using the clock signal prerecorded in the disc.

In addition, even if the clock and information signals are recorded in a superposed state, these signals can be separately reproduced. If the clock signal is recorded on substantially the entire area of the disc, the clock signal can be reproduced at any location on the disc. Therefore, quick disc rotation control, i.e., high-speed access can be performed.

CLAIMS

1. A disc device comprising: a disc recorded with a clock signal for modulating an intensity of reflected light and an information signal for turning the plane of polarization of the reflected light in a first or second direction, and an optical system for detecting the reflected light whose intensity is modulated and for differentially detecting the reflected light having the plane of polarization in the first direction and the reflected light having the plane of polarization in the second direction, wherein rotation of said disc is controlled in response to the clock signal reproduced on the basis of the differential detection and information signal recording or reproducing according to the differential detection is performed.

2. A disc device according to claim 1, wherein said disc comprises a magneto-optical disc.

3. A disc device according to claim 2, wherein said disc has grooves a depth of which is $\lambda/8$ (where $\lambda$ is a wavelength of read light), the information signal being recorded in said grooves.

4. A disc device according to claim 3, wherein the depth of said grooves is sinusoidally changed with respect to a $\lambda/8$ depth as the center of the sinusoidal wave, the clock signal being recorded according to the change in the depth of the grooves.

5. A disc device according to claim 3, wherein a width of each of said grooves is sinusoidally changed, the clock signal being recorded according to a change in the width.

6. A disc device according to claim 4 or 5, wherein a frequency of the clock signal is about 10 kHz, and a frequency of the information signal is several MHz.

0199820

$1/1$

FIG. 1

$\lambda/_{8}\pm\Delta X$

$\lambda/_{4}$

2    3    2

FIG. 2

0

FIG. 3

0

**I. CLASSIFICATION OF SUBJECT MATTER** (if several classification symbols apply, indicate all) *

According to International Patent Classification (IPC) or to both National Classification and IPC

Int.Cl$^4$  G11B 11/10, 7/00, 13/00

**II. FIELDS SEARCHED**

| Minimum Documentation Searched * | |
|---|---|
| Classification System | Classification Symbols |
| IPC | G11B 11/10, 7/00, 7/24, 13/00 |

| Documentation Searched other than Minimum Documentation to the Extent that such Documents are Included in the Fields Searched § | |
|---|---|
| Jitsuyo Shinan Koho | 1926 – 1985 |
| Kokai Jitsuyo Shinan Koho | 1971 – 1985 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| Y | JP, A, 59-5449 (Matsushita Electric Industrial Co., Ltd.), 12 January 1984 (12. 01. 84), Page 3, upper left column, line 14 to page 4, upper left column, line 13, Figs. 2 to 7 (Family: none) | 1 – 6 |
| Y | JP, A, 56-137531 (N.V. Philips' Gloeilampenfaburieken), 27 October 1981 (27. 10. 81), Page 7, upper right column, line 1 to page 12, lower left column, line 10, Figs. 1 to 7 & BE, A1, 886993 & DK, A, 3681 & AU, A1, 6599181 & FR, A1, 2473770 & BR, A, 8100043 & GB, A, 2067313 & NL, A, 8000122 & ES, A1, 498338 & DE, A1, 3100278 & AT, A, 5681 & ZA, A, 807714 & DD, C, 157230 & AT, B, 369915 & US, A, 4375088 & CA, A1, 1157946 & NZ, A, 195971 | 1 – 6 |

* Special categories of cited documents: [16]

"A" document defining the general state of the art which is not considered to be of particular relevance

"E" earlier document but published on or after the International filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| December 20, 1985 (20.12.85) | January 6, 1986 (06.01.86) |
| International Searching Authority [1] | Signature of Authorized Officer [6] |
| Japanese Patent Office | |

| | FURTHER INFORMATION CONTINUED FROM THE SECOND SHEET | |
|---|---|---|
| Y | US, A, 3491351 (Ampex Corporation), 20 January 1970 (20. 01. 70), Column 3, lines 30 to 69, Fig. 1 (Family: none) | 1 - 6 |

**V.☐ OBSERVATIONS WHERE CERTAIN CLAIMS WERE FOUND UNSEARCHABLE** [10]

This international search report has not been established in respect of certain claims under Article 17(2) (a) for the following reasons:

1.☐ Claim numbers.............because they relate to subject matter [12] not required to be searched by this Authority, namely:

2.☐ Claim numbers.............because they relate to parts of the international application that do not comply with the prescribed requirements to such an extent that no meaningful international search can be carried out [13], specifically:

**VI.☐ OBSERVATIONS WHERE UNITY OF INVENTION IS LACKING** [11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims

3.☐ No required additional search fees were timely paid by the applicant. Consequently, this international search report is restricted to the invention first mentioned in the claims. It is covered by claim numbers:

4.☐ As all searchable claims could be searched without effort justifying an additional fee, the International Searching Authority did not invite payment of any additional fee

Remark on Protest

☐ The additional search fees were accompanied by applicant's protest

☐ No protest accompanied the payment of additional search fees